(19) Europäisches Patentamt

European Patent Office

Office européen des brevets

(11) **EP 4 730 589 A1**

(12) **EUROPEAN PATENT APPLICATION**
published in accordance with Art. 153(4) EPC

(43) Date of publication:
**22.04.2026 Bulletin 2026/17**

(21) Application number: **24887450.5**

(22) Date of filing: **10.07.2024**

(51) International Patent Classification (IPC):
***H02J 3/46*** (2026.01)     ***H02J 3/36*** (2026.01)
***H02J 3/00*** (2026.01)

(52) Cooperative Patent Classification (CPC):
Y02E 60/60

(86) International application number:
**PCT/CN2024/104634**

(87) International publication number:
**WO 2025/097826 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.11.2023 CN 202311487522**

(71) Applicants:
• **Electric Power Research Institute,
China Southern Power Grid
Guangzhou, Guangdong 510663 (CN)**
• **China Southern Power Grid Company Limited
Guangzhou, Guangdong 510663 (CN)**

(72) Inventors:
• **ZOU, Changyue
Guangzhou, Guangdong 510663 (CN)**
• **LI, Yan
Guangzhou, Guangdong 510663 (CN)**
• **ZHAO, Xiaobin
Guangzhou, Guangdong 510663 (CN)**

• **LU, Yuxin
Guangzhou, Guangdong 510663 (CN)**
• **PENG, Faxi
Guangzhou, Guangdong 510663 (CN)**
• **YUAN, Zhiyong
Guangzhou, Guangdong 510663 (CN)**
• **QIAO, Xuebo
Guangzhou, Guangdong 510663 (CN)**
• **HOU, Ting
Guangzhou, Guangdong 510663 (CN)**
• **LI, Lingfei
Guangzhou, Guangdong 510663 (CN)**
• **FENG, Junjie
Guangzhou, Guangdong 510663 (CN)**
• **HUANG, Yihong
Guangzhou, Guangdong 510663 (CN)**
• **SHI, Youjie
Guangzhou, Guangdong 510663 (CN)**

(74) Representative: **Schmid, Nils T.F.
SKM-IP PartGmbB
Oberanger 45
80331 München (DE)**

(54) **OFFSHORE WIND POWER DIRECT-CURRENT TRANSMISSION SYSTEM AND CONTROL METHOD**

(57)     An offshore wind power direct-current transmission system and a control method. The system comprises a plurality of offshore wind power generator sets, a plurality of wind power converters, an offshore converter station, an onshore converter station and a receiving-end alternating-current grid. Each wind power converter comprises a wind power conversion device, a wind turbine energy consumption apparatus and a wind power inverter, which are connected in sequence. In the present application, direct-current energy consumption apparatuses centrally configured on a direct-current side of the onshore converter station are omitted, thereby reducing the overall system volume, weight and cost. In the control method, when it is detected that an alternating-current fault occurs at the receiving-end alternating-current grid, an estimated surplus power value is calculated to determine the number and capacity of wind turbine energy consumption apparatuses to be triggered and called, and the wind turbine energy consumption apparatuses in the wind power converters are triggered and called to maintain a surplus power balance. Therefore, by means of the present application, compared with the prior art, the wind turbine energy consumption apparatuses in the wind power converters are triggered and called to maintain

**(Cont. next page)**

EP 4 730 589 A1

a surplus power balance, and the overall system volume, weight and cost are also reduced.

**FIG. 1**

## Description

The present application claims priority to Chinese Patent Application 202311487522.4, titled "OFFSHORE WIND POWER DIRECT-CURRENT TRANSMISSION SYSTEM AND CONTROL METHOD", filed on November 8, 2023 with the China National Intellectual Property Administration, which is incorporated herein by reference in its entirety.

## FIELD

The present disclosure relates to the technical field of wind power, and in particularly to an offshore wind power direct-current transmission system and a method for controlling an offshore wind power direct-current transmission system.

## BACKGROUND

Offshore wind power drives wind power technology advancement and industry upgrade, and promotes energy structure adjustment and green, low-carbon development. The vast reserves of far-shore offshore wind resources hold significant potential. Fully harnessing these far-shore wind energy resources accelerates energy transition, making far-shore wind power a focus for future renewable energy development.

In conventional offshore wind power transmission systems, in a case that a receiving-end alternating-current power grid malfunctions, an output power of a receiving-end converter station decreases, the wind farm fails to rapidly adjust its power for responding to this situation, and thus sustained surplus power leads to a continuous increase in a direct-current voltage until the system trips. When an alternating-current system fault occurs in the receiving-end alternating-current power grid, a direct-current voltage and a module voltage increase continuously, jeopardizing safe operation of the system. To prevent system tripping caused by severe and persistent faults on the receiving-end, direct-current energy dissipation devices are typically arranged on a direct-current side of an onshore converter station in the offshore wind power transmission system to achieve surplus power balance under a transient operating condition. Due to the large volume, heavy weight, and high cost of the direct-current energy dissipation devices configured on the direct-current side of the onshore converter station, this approach for achieving surplus power balance still results in large volume, heavy weight, and high cost of the entire system.

To address the above issue, an offshore wind power direct-current transmission system and a method for controlling an offshore wind power direct-current transmission system are provided in the present disclosure to maintain surplus power balance while reducing the overall system volume, weight, and cost.

## SUMMARY

In view of this, an offshore wind power direct-current transmission system and a method for controlling an offshore wind power direct-current transmission system are provided in the present disclosure, to eliminate the need for a direct-current energy dissipation device centrally configured on a direct-current side of an onshore converter station for reducing the overall volume, weight, and cost of the system, and maintain surplus power balance by activating the wind turbine energy dissipation device integrated in a wind power converter.

An offshore wind power direct-current transmission system is provided. The offshore wind power direct-current transmission system includes multiple offshore wind turbines, multiple wind power converters, an offshore converter station, an onshore converter station, and a receiving-end alternating-current power grid.

The multiple offshore wind turbines are connected to the multiple wind power converters in a one-to-one manner to form multiple branches connected in parallel, and the multiple branches are connected to the offshore converter station.

Each of the multiple wind power converters includes a wind power conversion device, a wind turbine energy dissipation device, and a wind power inverter that are sequentially connected.

In an embodiment, in the offshore wind power direct-current transmission system, rapid communication channels are established between the offshore converter station and the multiple wind power converters.

A method for controlling an offshore wind power direct-current transmission system, applied to the offshore wind power direct-current transmission system described above, is provided. The method includes:

obtaining, on detecting that an alternating-current fault occurs in the receiving-end alternating-current power grid, a current operating power, an alternating-current fault dip depth, and a direct-current voltage fluctuation of the receiving-end alternating-current power grid;

calculating an estimated surplus power based on the current operating power and the alternating-current fault dip depth;

determining, based on the estimated surplus power and the direct-current voltage fluctuation, a quantity and a capacity of the wind turbine energy dissipation device to be activated ; and

activating the wind turbine energy dissipation device according to the determined quantity and capacity of the wind turbine energy dissipation device to maintain surplus power balance.

In an embodiment, after the calculating an estimated surplus power based on the current operating power and the alternating-current fault dip depth, the method further includes:

suspending the activating the wind turbine energy dissipation device in a case that the estimated surplus power is negative; and

performing the process of determining, based on the estimated surplus power and the direct-current voltage fluctuation, a quantity and a capacity of the wind turbine energy dissipation device to be activated in a case that the estimated surplus power is positive.

In an embodiment, the calculating an estimated surplus power based on the current operating power and the alternating-current fault dip depth includes:

determining, based on the alternating-current fault dip depth after the alternating-current fault occurs, per-unit values of three-phase voltages; and

calculating, in conjunction with a system rated active power, the estimated surplus power based on the current operating power and the determined per-unit values of the three-phase voltages after the alternating-current fault.

In an embodiment, a formula for the calculating, in conjunction with a system rated active power, the estimated surplus power based on the current operating power and the determined per-unit values of the three-phase voltages after the alternating-current fault is expressed as:

$$P = W_0 - \frac{(U_A + U_B + U_C)}{3} * P_{norm}$$

where $P$ represents the estimated surplus power, $W_0$ represents the current operating power, $U_A$, $U_B$ and $U_C$ represents the per-unit values of the three-phase voltages after the alternating-current fault, and $P_{norm}$ represents the system rated active power.

In an embodiment, the method further includes: performing a closed-loop regulation, based on a direct-current voltage, on the quantity of the wind turbine energy dissipation device to be activated.

It can be seen from the above technical solution that an offshore wind power direct-current transmission system and a method for controlling an offshore wind power direct-current transmission system are provided according to the embodiments of the present disclosure. The offshore wind power direct-current transmission system includes multiple offshore wind turbines, multiple wind power converters, an offshore converter station, an onshore converter station, and a receiving-end alternating-current power grid. The multiple offshore wind turbines are connected to the multiple wind power converters in a one-to-one manner to form multiple branches connected in parallel, and the multiple branches are connected to the offshore converter station. The offshore converter station, the onshore converter station, and the receiving-end alternating-current power grid are sequentially connected. Each of the multiple wind power converters includes a wind power conversion device, a wind turbine energy dissipation device, and a wind power inverter that are sequentially connected. The wind power inverter is connected to the offshore converter station. The offshore wind power direct-current transmission system according to the present disclosure eliminates the need for direct-current energy dissipation devices centrally arranged on a direct-current side of the onshore converter station, thereby reducing the overall volume, weight, and cost of the system.

With the method for controlling the offshore wind power direct-current transmission system according to the present disclosure, in a case that an alternating-current fault is detected on the receiving-end alternating-current power grid, a current operating power, an alternating-current fault dip depth, and a direct-current voltage fluctuation of the receiving-end alternating-current power grid are obtained. An estimated surplus power is calculated. A quantity and a capacity of the wind turbine energy dissipation device to be activated are determined based on the estimated surplus power. A wind turbine energy dissipation device in the quantity and with the capacity in the wind power converters is activated to maintain surplus power balance.

Therefore, compared with the conventional technology, the technical solution in the present disclosure reduces the overall volume, weight and cost of the system by eliminating the need for direct-current energy dissipation devices centrally arranged on the direct-current side of the onshore converter station. Further, the quantity and capacity of the wind turbine energy dissipation device to be activated are determined by calculating an estimated surplus power, and the wind turbine energy dissipation device in the wind power converter is activated accordingly, such that surplus power balance is maintained.

**BRIEF DESCRIPTION OF THE DRAWINGS**

To more clearly illustrate technical solutions in the embodiments of the present disclosure or in the conventional technology, drawings to be used in the descriptions of the embodiments or the conventional technology are briefly introduced hereinafter. It is apparent that the drawings described below show merely the embodiments of the present disclosure, and other drawings may be obtained by those skilled in the art from the drawings without any creative work.

FIG. 1 is a schematic diagram of an offshore wind power direct-current transmission system according to an embodiment of the present disclosure;

FIG. 2 is a schematic diagram of an offshore wind power direct-current transmission system according to another embodiment of the present disclosure;

FIG. 3 is a flowchart of a method for controlling an offshore wind power direct-current transmission system according to an embodiment of the present disclosure; and

FIG. 4 is a flowchart of a method for controlling an offshore wind power direct-current transmission system according to another embodiment of the present disclosure.

## DETAILED DESCRIPTION

Technical solutions in the embodiments of the present disclosure are described clearly and completely below in conjunction with the drawings of the embodiments of the present disclosure. Apparently, the embodiments described below are only some embodiments of the present disclosure, rather than all the embodiments. Any other embodiments obtained by those skilled in the art based on the embodiments of the present disclosure without any creative effort fall within the protection scope of the present disclosure.

The technical solutions provided in the present disclosure are described as follows.

An offshore wind power direct-current transmission system is provided according to an embodiment of the present disclosure. The offshore wind power direct-current transmission system eliminates the need for direct-current energy dissipation devices centrally arranged on a direct-current side of an onshore converter station in the conventional technology, reducing the overall volume, weight and cost of the system.

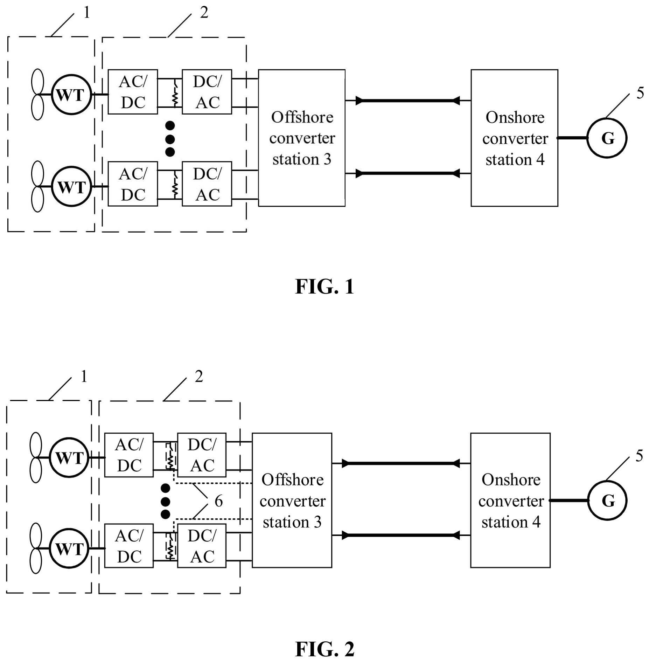

FIG. 1 is a schematic diagram of an offshore wind power direct-current transmission system according to an embodiment of the present disclosure.

As shown in FIG. 1, the offshore wind power direct-current transmission system includes multiple offshore wind turbines 1, multiple wind power converters 2, an offshore converter station 3, an onshore converter station 4, and a receiving-end alternating-current power grid 5.

The multiple offshore wind turbines are connected to the multiple wind power converters in a one-to-one manner. The multiple wind power converters are connected in parallel and are connected to the offshore converter station.

Each of the multiple wind power converters includes a wind power conversion device, a wind turbine energy dissipation device, and a wind power inverter that are sequentially connected.

In an embodiment of the present disclosure, the offshore wind power direct-current transmission system includes multiple offshore wind turbines and multiple wind power converters. The multiple offshore wind turbines are connected to the multiple wind power converters in a one-to-one manner to form multiple branches connected in parallel, and the multiple branches are connected to the offshore converter station. The offshore converter station, the onshore converter station, and the receiving-end alternating-current power grid are sequentially connected. Each of the multiple wind power converters is formed by a wind power conversion device, a wind turbine energy dissipation device, and a wind power inverter that are sequentially connected.

To prevent problems such as system tripping caused by severe and persistent faults on the receiving-end, an unloading device is typically configured in a conventional wind power direct-current transmission system, that is, a direct-current energy dissipation device is arranged on a direct-current side of an onshore converter station in the offshore wind power direct-current transmission system to achieve surplus power balance under a transient operating condition. Compared with the conventional wind power direct-current transmission system, the offshore wind power direct-current transmission system according to the present disclosure is not provided with a direct-current energy dissipation device at the onshore converter station, reducing the overall volume, weight and cost of the system. Further, a built-in wind turbine energy dissipation device of the wind power converter is adopted in the present disclosure for maintaining surplus power balance. The built-in wind turbine energy dissipation device of the wind power converter is activated to achieve surplus power balance.

In addition, FIG. 2 is a schematic diagram of an offshore wind power direct-current transmission system according to another embodiment of the present disclosure. As shown in FIG. 2, rapid communication channels 6 are established between an offshore converter station and wind power converters.

By establishing rapid communication channels between the offshore converter station and the wind power converters, wind turbine energy dissipation devices can be rapidly activated within a time period T1. T1 is determined based on

$$T_1 = k \frac{C_{sm}(U_{sm\_limit}^2 - U_{sm}^2) \times 3\mathrm{N}}{P_{norm}}$$

where $U_{sm}$ represents a maximum module voltage during steady-state operation; $U_{sm\_limit}$ represents a maximum module voltage permitted during a transient operating state; $C_{sm}$ represents a module capacitance; $P_{norm}$ represents a system rated active power; and $K$ represents a safety margin, where $K < 1$ and 0.5 is generally adopted.

It can be seen from the above technical solution that an offshore wind power direct-current transmission system is provided according to the embodiments of the present disclosure. The offshore wind power direct-current transmission system includes multiple offshore wind turbines, multiple wind power converters, an offshore converter station, an onshore converter station, and a receiving-end alternating-current power grid. The multiple offshore wind turbines are connected to the multiple wind power converters in a one-to-one manner to form multiple branches connected in parallel, and the multiple branches are connected to the offshore converter station. The offshore converter station, the onshore converter station, and the receiving-end alternating-current power grid are sequentially connected. Each of the multiple wind power converters includes a wind power conversion device, a wind turbine energy dissipation device, and a wind power inverter that are sequentially connected. The wind power inverter is connected to the offshore converter station. The offshore wind power direct-current transmission system according to the present disclosure eliminates the need for direct-current energy dissipation devices centrally arranged on a direct-current side of the onshore converter station, thereby reducing the overall volume, weight, and cost of the system.

With a method for controlling the offshore wind power direct-current transmission system according to the present disclosure, in a case that an alternating-current fault is detected on the receiving-end alternating-current power grid, a current operating power, an alternating-current fault dip depth, and a direct-current voltage fluctuation of the receiving-end alternating-current power grid are obtained. An estimated surplus power is calculated. A quantity and a capacity of the wind turbine energy dissipation device to be activated are determined based on the estimated surplus power. A wind turbine energy dissipation device in the quantity and with the capacity in the wind power converters is activated to maintain surplus power balance.

Therefore, compared with the conventional technology, the technical solution in the present disclosure reduces the overall volume, weight and cost of the system by eliminating the need for direct-current energy dissipation devices centrally arranged on the direct-current side of the onshore converter station. Further, the quantity and capacity of the wind turbine energy dissipation device to be activated are determined by calculating an estimated surplus power, and the wind turbine energy dissipation device in the wind power converter is activated accordingly, such that surplus power balance is maintained.

A method for controlling an offshore wind power direct-current transmission system is provided according to an embodiment of the present disclosure. The method is applied to the offshore wind power direct-current transmission system. Particularly, in a case that an alternating-current fault is detected on a receiving-end alternating-current power grid, surplus power balance of the offshore wind power direct-current transmission system can be maintained using the method, avoiding the problem that a continuously rising direct-current voltage results in system tripping or threats to the safe operation of the system.

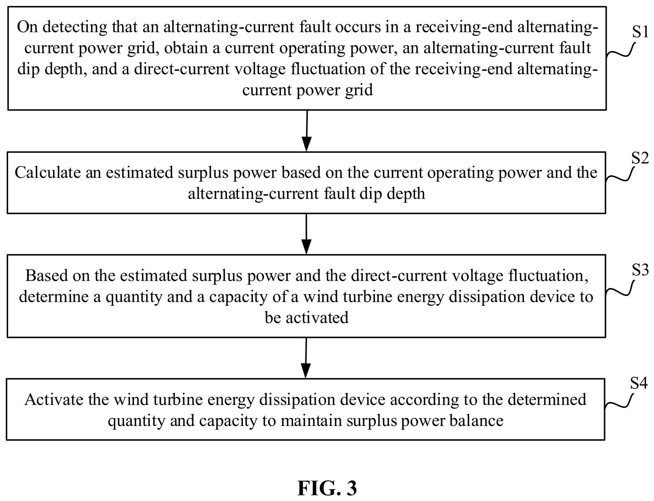

FIG. 3 is a flowchart of a method for controlling an offshore wind power direct-current transmission system according to an embodiment of the present disclosure. With the method, in a case that an alternating-current fault is detected on a receiving-end alternating-current power grid, an estimated surplus power is calculated, the quantity and the capacity of the wind turbine energy dissipation device to be activated are determined based on the estimated surplus power. A wind turbine energy dissipation device in the quantity and with the capacity in the wind power converters is activated to maintain surplus power balance. In this way, surplus power balance is achieved without additional direct-current energy dissipation devices centrally arranged on a direct-current side of an onshore converter station.

As shown in FIG. 3, the method includes the following steps S1 to S4.

In step S1, on detecting an alternating-current fault occurs in a receiving-end alternating-current power grid, a current operating power, an alternating-current fault dip depth, and a direct-current voltage fluctuation of the receiving-end alternating-current power grid are obtained.

In an embodiment of the present disclosure, in a case that an alternating-current fault is detected on the receiving-end alternating-current power grid, the current operating power, the alternating-current fault dip depth, and the direct-current voltage fluctuation of the receiving-end alternating-current power grid are obtained so that an estimated surplus power is calculated based on the obtained current operating power and alternating-current fault dip depth, and the quantity and the capacity of the wind turbine energy dissipation device to be activated are determined.

In step S2, an estimated surplus power is calculated based on the current operating power and alternating-current fault dip depth.

In an embodiment, voltage dips are generally caused by sudden short circuits, particularly asymmetrical faults. When an asymmetrical short circuit or a large-magnitude voltage dip occurs in the system, three-phase voltages exhibit a substantial proportion of negative-sequence components and zero-sequence components. The process of calculating the estimated surplus power based on the current operating power and alternating-current fault dip depth includes the following two steps:

1. Per-unit values of the three-phase voltages after the fault are determined based on the alternating-current fault dip depth.
2. The estimated surplus power is calculated based on the current operating power and the per-unit values of the three-phase voltages after the fault, in conjunction with a system rated active power.

A formula for calculating the estimated surplus power is expressed as:

$$P = W_0 - \frac{(U_A + U_B + U_C)}{3} * P_{norm}$$

where $P$ represents the estimated surplus power, $W_0$ represents the current operating power, $U_A$, $U_B$ and $U_C$ represent the per-unit values of the three-phase voltages after the fault, that is, a per-unit voltage of phase-A, a per-unit voltage of phase-B and a per-unit voltage of phase-C after the fault, and $P_{norm}$ represents the system rated active power.

In addition, according to the actual operation situation, a determination of whether to activate the wind turbine energy dissipation device may be performed according to the present disclosure. That is, it is determined whether to activate the wind turbine energy dissipation device based on the estimated surplus power.

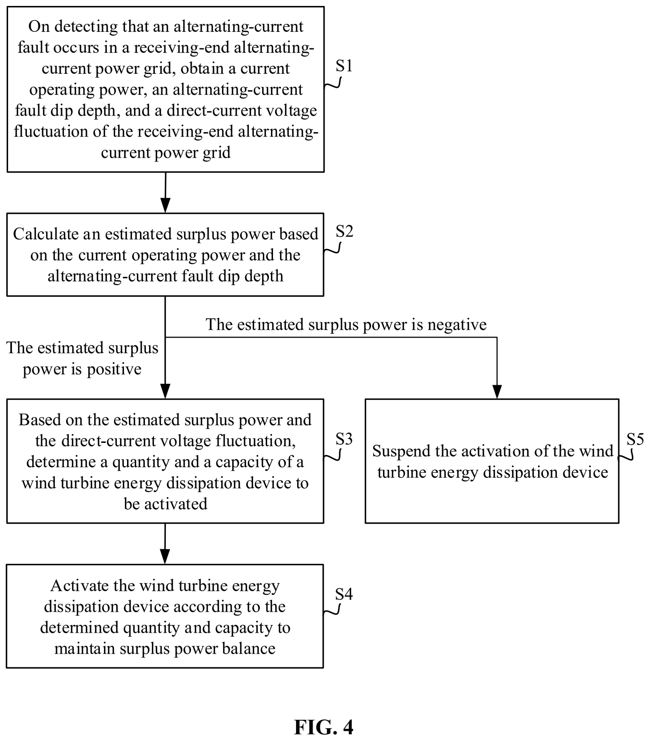

As shown in FIG. 4, after the estimated surplus power is calculated based on the current operating power and the alternating-current fault dip depth, the method further includes:

suspending the operation of activating the wind turbine energy dissipation device in a case that the estimated surplus power is negative; and

performing the process of determining, based on the estimated surplus power and the direct-current voltage fluctuation, the quantity and the capacity of the wind turbine energy dissipation device to be activated in a case that the estimated surplus power is positive.

In the case that the estimated surplus power is negative, step S4 is performed, that is, the quantity and the capacity of the wind turbine energy dissipation device to be activated is determined based on the estimated surplus power and the direct-current voltage fluctuation. In the case that the estimated surplus power is negative, step S5 is performed, that is, the wind turbine energy dissipation device is not activated.

In an embodiment, it is not required to perform adjustment for surplus power balance in response to the calculated negative estimated surplus power, that is, the wind turbine energy dissipation device is not activated. It is required to perform adjustment for surplus power balance in response to the calculated positive estimated surplus power. In this case, the quantity and capacity of the wind turbine energy dissipation device to be activated are determined based on the estimated surplus power and the direct-current voltage fluctuation. The wind turbine energy dissipation device is activated according to the determined quantity and capacity to maintain the surplus power balance.

In step S3, a quantity and a capacity of the wind turbine energy dissipation device to be activated are determined based on the estimated surplus power and the direct-current voltage fluctuation.

In an embodiment of the present disclosure, the quantity of the wind turbine energy dissipation device to be activated is determined based on the estimated surplus power, and the capacity of the wind turbine energy dissipation device to be activated is dynamically regulated based on the direct-current voltage fluctuation.

In addition, in the subsequent process of maintaining surplus power balance, the quantity of the wind turbine energy dissipation device to be activated may be regulated in a closed-loop manner based on a direct-current voltage.

In step S4, the wind turbine energy dissipation device is activated according to the determined quantity and the capacity to maintain the surplus power balance.

In an embodiment of the present disclosure, after the quantity and the capacity of the wind turbine energy dissipation device to be activated are determined based on the estimated surplus power and the direct-current voltage fluctuation, the wind turbine energy dissipation device is activated according to the determined quantity and capacity to maintain surplus power balance. In practice, for determining the wind turbine energy dissipation devices to be activated, it is preferably to ensure that the determined wind turbine energy dissipation devices are evenly distributed on different alternating-current feeders to avoid feeder overcurrent.

It can be understood that the method according to the present disclosure is further applicable to an offshore wind power direct-current transmission system using a bipolar topology.

In addition, an alternative solution provided according to the present disclosure is to trigger the activation of the wind turbine energy dissipation device via electrical quantity conduction. For example, an alternating-current fault that occurs on a receiving-end alternating-current power grid is directly mapped to an offshore alternating-current system, causing a wind turbine to automatically trigger the activation of a wind turbine energy dissipation device. However, the alternative solution results in a large disturbance for the wind turbine and causes the wind turbine prone to shutdowns.

It can be seen from the above technical solution that an offshore wind power direct-current transmission system and a method for controlling an offshore wind power direct-current transmission system are provided according to the embodiments of the present disclosure. The offshore wind power direct-current transmission system includes multiple offshore wind turbines, multiple wind power converters, an offshore converter station, an onshore converter station, and a receiving-end alternating-current power grid. The multiple offshore wind turbines are connected to the multiple wind power converters in a one-to-one manner to form multiple branches connected in parallel, and the multiple branches are connected to the offshore converter station. The offshore converter station, the onshore converter station, and the receiving-end alternating-current power grid are sequentially connected. Each of the multiple wind power converters includes a wind power conversion device, a wind turbine energy dissipation device, and a wind power inverter that are sequentially connected. The wind power inverter is connected to the offshore converter station. The offshore wind power direct-current transmission system according to the present disclosure eliminates the need for direct-current energy dissipation devices centrally arranged on a direct-current side of the onshore converter station, thereby reducing the overall volume, weight, and cost of the system.

With the method for controlling the offshore wind power direct-current transmission system according to the present disclosure, in a case that an alternating-current fault is detected on the receiving-end alternating-current power grid, a current operating power, an alternating-current fault dip depth, and a direct-current voltage fluctuation of the receiving-end alternating-current power grid are obtained. An estimated surplus power is calculated. A quantity and a capacity of the wind turbine energy dissipation device to be activated are determined based on the estimated surplus power. A wind turbine energy dissipation device in the quantity and with the capacity in the wind power converters is activated to maintain surplus power balance.

Therefore, compared with the conventional technology, the technical solution in the present disclosure reduces the overall volume, weight and cost of the system by eliminating the need for direct-current energy dissipation devices centrally arranged on the direct-current side of the onshore converter station. Further, the quantity and capacity of the wind turbine energy dissipation device to be activated are determined by calculating an estimated surplus power, and the wind turbine energy dissipation device in the wind power converter is activated accordingly, such that surplus power balance is maintained.

Two embodiments are provided as follows to further describe the implementation of the present disclosure.

Embodiment 1: It is assumed that 100 pieces of 10MW-wind turbines are configured in a wind farm, and a current operating power is 300MW. In a case that a three-phase metallic alternating-current fault occurs, per-unit values of three-phase voltages after the fault are equal to 0, that is, a per-unit voltage of phase A, a per-unit voltage of phase B, and a per-unit voltage of phase C, are all equal to 0.

An estimated surplus power is calculated: 300-(0+0+0)/3*1000=300MW.

Since the estimated surplus power is positive, a quantity and a capacity of the wind turbine energy dissipation device to be activated are determined based on the estimated surplus power and a direct-current voltage fluctuation. According to the quantity of the wind turbine energy dissipation device to be activated determined based on the estimated surplus power, the direct-current transmission system directly activates 30 pieces of wind turbine energy dissipation devices among the 100 pieces of wind turbines. The capacity of the activated wind turbine energy dissipation devices is dynamically regulated based on the direct-current voltage fluctuation. The quantity of activated wind turbine energy dissipation devices is regulated in a closed-loop manner based on a direct-current voltage during a subsequent process for maintaining surplus power balance.

Embodiment 2: It is assumed that 100 pieces of 10MW-wind turbines are configured in a wind farm, and a current operating power is 300MW. In a case that a single-phase (phase-A) metallic fault occurs, per-unit values of three-phase voltages after the fault are 0, 1, and 1, respectively, that is, a per-unit voltage of phase-A is equal to 0, a per-unit voltage of phase-B is equal to 1, and a per-unit voltage of phase-C is equal to 1.

An estimated surplus power is calculated: 300-(0+1+1)/3*1000 =-367MW.

Since the estimated surplus power is negative, no wind turbine energy dissipation device is activated, that is, control is not triggered.

It should be further noted that in the present disclosure, the relationship terms such as "first" and "second" are only used to distinguish one entity or operation from another entity or operation, rather than to necessitate or imply an actual relationship or order between the entities or operations. Moreover, terms "include", "comprise" or any variants thereof are intended to be non-exclusive. Therefore, a process, method, article or device including a series of elements includes not only the elements but also other elements that are not enumerated, or further includes elements inherent to the process, method, article or device. Unless expressively limited otherwise, the element defined by the statement "comprising (including) a..." does not exclude the case that other identical elements may exist in the process, method, article or device including the element.

The above embodiments in this specification are described in a progressive manner. Each of the embodiments is mainly focused on describing its differences from other embodiments, and references may be made among these embodiments with respect to the same or similar portions among these embodiments.

With the description of the embodiments disclosed above, those skilled in the art may implement or use the present disclosure. It is apparent for those skilled in the art to make various modifications to these embodiments. The general principle defined herein may be implemented in other embodiments without departing from scope of the present disclosure. Therefore, the present disclosure is not limited to the embodiments described herein, but should comply with the widest scope consistent with the principles and novel features disclosed herein.

**Claims**

1. An offshore wind power direct-current transmission system, comprising:

a plurality of offshore wind turbines,
a plurality of wind power converters,
an offshore converter station,
an onshore converter station, and
a receiving-end alternating-current power grid,
wherein
the plurality of offshore wind turbines are connected to the plurality of wind power converters in a one-to-one manner to form a plurality of branches connected in parallel, and the plurality of branches are connected to the offshore converter station;
the offshore converter station, the onshore converter station, and the receiving-end alternating-current power grid are sequentially connected; and
each of the plurality of wind power converters comprises a wind power conversion device, a wind turbine energy dissipation device, and a wind power inverter that are sequentially connected, wherein the wind power inverter is connected to the offshore converter station.

2. The offshore wind power direct-current transmission system according to claim 1, wherein
rapid communication channels are established between the offshore converter station and the plurality of wind power converters.

3. A method for controlling an offshore wind power direct-current transmission system, applied to the offshore wind power direct-current transmission system according to claim 1 or 2, comprising:

obtaining, on detecting that an alternating-current fault occurs in the receiving-end alternating-current power grid, a current operating power, an alternating-current fault dip depth, and a direct-current voltage fluctuation of the receiving-end alternating-current power grid;
calculating an estimated surplus power based on the current operating power and the alternating-current fault dip depth;
determining, based on the estimated surplus power and the direct-current voltage fluctuation, a quantity and a capacity of the wind turbine energy dissipation device to be activated; and
activating the wind turbine energy dissipation device according to the determined quantity and capacity of the wind turbine energy dissipation device to maintain surplus power balance.

4. The method according to claim 3, wherein after the calculating an estimated surplus power based on the current operating power and the alternating-current fault dip depth, the method further comprises:

suspending the activating the wind turbine energy dissipation device in a case that the estimated surplus power is negative; and
performing the process of determining, based on the estimated surplus power and the direct-current voltage fluctuation, a quantity and a capacity of the wind turbine energy dissipation device to be activated in a case that the estimated surplus power is positive.

5. The method according to claim 3, wherein the calculating an estimated surplus power based on the current operating power and the alternating-current fault dip depth comprises:

determining, based on the alternating-current fault dip depth after the alternating-current fault occurs, per-unit values of three-phase voltages; and
calculating, in conjunction with a system rated active power, the estimated surplus power based on the current operating power and the determined per-unit values of the three-phase voltages after the alternating-current fault.

6. The method according to claim 5, wherein a formula for the calculating, in conjunction with a system rated active power, the estimated surplus power based on the current operating power and the determined per-unit values of the three-phase voltages after the alternating-current fault is expressed as:

$$P = W_0 - \frac{(U_A + U_B + U_C)}{3} * P_{norm}$$

wherein P represents the estimated surplus power, $W_0$ represents the current operating power, $U_A$, $U_B$ and $U_C$ represents the per-unit values of the three-phase voltages after the alternating-current fault, and $P_{norm}$ represents the system rated active power.

7. The method according to claim 3, further comprising:
performing a closed-loop regulation, based on a direct-current voltage, on the quantity of the wind turbine energy dissipation device to be activated.

**FIG. 1**

**FIG. 2**

On detecting that an alternating-current fault occurs in a receiving-end alternating-current power grid, obtain a current operating power, an alternating-current fault dip depth, and a direct-current voltage fluctuation of the receiving-end alternating-current power grid — S1

Calculate an estimated surplus power based on the current operating power and the alternating-current fault dip depth — S2

Based on the estimated surplus power and the direct-current voltage fluctuation, determine a quantity and a capacity of a wind turbine energy dissipation device to be activated — S3

Activate the wind turbine energy dissipation device according to the determined quantity and capacity to maintain surplus power balance — S4

**FIG. 3**

On detecting that an alternating-current fault occurs in a receiving-end alternating-current power grid, obtain a current operating power, an alternating-current fault dip depth, and a direct-current voltage fluctuation of the receiving-end alternating-current power grid — S1

Calculate an estimated surplus power based on the current operating power and the alternating-current fault dip depth — S2

The estimated surplus power is negative

The estimated surplus power is positive

Based on the estimated surplus power and the direct-current voltage fluctuation, determine a quantity and a capacity of a wind turbine energy dissipation device to be activated — S3

Suspend the activation of the wind turbine energy dissipation device — S5

Activate the wind turbine energy dissipation device according to the determined quantity and capacity to maintain surplus power balance — S4

**FIG. 4**

## INTERNATIONAL SEARCH REPORT

| International application No. |
| --- |
| **PCT/CN2024/104634** |

**A. CLASSIFICATION OF SUBJECT MATTER**

H02J 3/46(2006.01)i;  H02J 3/36(2006.01)i;  H02J 3/00(2006.01)i

According to International Patent Classification (IPC) or to both national classification and IPC

**B. FIELDS SEARCHED**

Minimum documentation searched (classification system followed by classification symbols)

IPC:  H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 海上, 风电, 耗能, 交流, 盈余功率, Offshore, marine, wind powe, energy consumption

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117498460 A (ELECTRIC POWER RESEARCH INSTITUTE, CHINA SOUTHERN POWER GRID) 02 February 2024 (2024-02-02)<br>    claims 1-7 | 1-7 |
| X | CN 116526540 A (CHINA THREE GORGES UNIVERSITY et al.) 01 August 2023 (2023-08-01)<br>    description, paragraphs 0004-0021, and figures 1-2 | 1-2 |
| X | CN 114221370 A (POWERCHINA FUJIAN ELECTRIC POWER ENGINEERING CO., LTD.) 22 March 2022 (2022-03-22)<br>    description, paragraphs 0005-0038, and figure 1 | 1-2 |
| A | CN 116031925 A (HUANENG CLEAN ENERGY RESEARCH INSTITUTE et al.) 28 April 2023 (2023-04-28)<br>    entire document | 1-7 |
| A | CN 109873441 A (XI'AN XJ POWER ELECTRONICS TECHNOLOGY CO., LTD.) 11 June 2019 (2019-06-11)<br>    entire document | 1-7 |

☑ Further documents are listed in the continuation of Box C.      ☑ See patent family annex.

| | |
| --- | --- |
| \*    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **23 September 2024** | **08 October 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/104634**

## C. DOCUMENTS CONSIDERED TO BE RELEVANT

| Category* | Citation of document, with indication, where appropriate, of the relevant passages | Relevant to claim No. |
|---|---|---|
| A | CN 110224438 A (CHONGQING UNIVERSITY) 10 September 2019 (2019-09-10) entire document | 1-7 |
| A | JP 2008092767 A (MATSUSHITA ELECTRIC INDUSTRIAL CO., LTD.) 17 April 2008 (2008-04-17) entire document | 1-7 |

Form PCT/ISA/210 (second sheet) (July 2022)

**INTERNATIONAL SEARCH REPORT**
Information on patent family members

International application No.

**PCT/CN2024/104634**

| Patent document cited in search report | | | Publication date (day/month/year) | Patent family member(s) | Publication date (day/month/year) |
|---|---|---|---|---|---|
| CN | 117498460 | A | 02 February 2024 | None | |
| CN | 116526540 | A | 01 August 2023 | None | |
| CN | 114221370 | A | 22 March 2022 | None | |
| CN | 116031925 | A | 28 April 2023 | None | |
| CN | 109873441 | A | 11 June 2019 | None | |
| CN | 110224438 | A | 10 September 2019 | None | |
| JP | 2008092767 | A | 17 April 2008 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311487522